Europäisches Patentamt

European Patent Office

Office européen des brevets

(19)

(11) Publication number: **0 099 918**
**B1**

# EUROPEAN PATENT SPECIFICATION

(45) Date of publication of patent specification: **10.09.86**

(21) Application number: **83900722.6**

(22) Date of filing: **02.02.83**

(88) International application number:
**PCT/GB83/00027**

(87) International publication number:
**WO 83/02695 04.08.83 Gazette 83/18**

(51) Int. Cl.⁴: **H 02 P 8/00**

(54) **STEPPER MOTOR CONTROL CIRCUIT.**

(30) Priority: **02.02.82 GB 8202913**

(43) Date of publication of application:
**08.02.84 Bulletin 84/06**

(45) Publication of the grant of the patent:
**10.09.86 Bulletin 86/37**

(84) Designated Contracting States:
**DE FR GB**

(56) References cited:
**DE-A-2 361 003**
**FR-A-2 218 693**
**US-A-3 909 693**
**US-A-4 255 693**

**Electronic Engineering, vol.52 no. 636, April 1980 (London, GB) E. DAVIES: "Using VMOS in microprocessing stepper motor control", pages 89-92**

(73) Proprietor: **LUCAS INDUSTRIES public limited company**
**Great King Street**
**Birmingham, B19 2XF West Midlands (GB)**

(72) Inventor: **TURVEY, Simon**
**76 Radbourne Road Shirley**
**Solihull West Midlands B90 3RS (GB)**

(74) Representative: **Prutton, Roger et al**
**Marks & Clerk Alpha Tower Suffolk Street**
**Queensway**
**Birmingham B1 1TT (GB)**

Courier Press, Leamington Spa, England.

## Description

This invention relates to a stepper motor control circuit.

A stepper motor control circuit has previously been proposed in US—A—4 255 693 which includes a waveform generator circuit which produces two substantially stepless symmetrical waveforms of constant amplitude and constant frequency, the waveforms being 90° out of phase, and a pair of pulse width modulation circuits arranged to drive the motor windings, each modulation circuit receiving one of the waveforms as a current demand signal and a feedback signal from a current sensor providing a signal related to the instantaneous current in the associated one of the motor windings. The prior disposal was specifically concerned with a disc drive system in which maintenance of a precise speed was of paramount importance and the waveform generator took the form of a phase-locked loop which was locked to a fixed frequency oscillator. To ensure maintenance of constant speed under varying load conditions the prior proposed circuit included a phase detector (outside the phase locked loop) which was arranged to operate to provide a signal related to the difference between the phases of voltage applied to and the current flowing in the motor windings, this signal being introduced into the phase-locked loop to permit extra torque to be generated.

The present invention is not concerned with constant speed drive, but with providing a circuit in which higher than normal running but variable speed can be achieved, but slip (or stall) at higher torques is prevented. This objective cannot be achieved by the prior proposal in which stall would occur if a torque load is applied which is higher than that which the motor can carry at the fixed speed.

Accordingly, the invention is characterized in that a variable step rate demand signal is employed (instead of the fixed frequency oscillator of the prior art) and in that the phase detector circuit is connected to the waveform generator so as to reduce the frequency of the waveforms independently of the step rate demand signal when a predetermined out of phase condition is detected by said phase detector circuit.

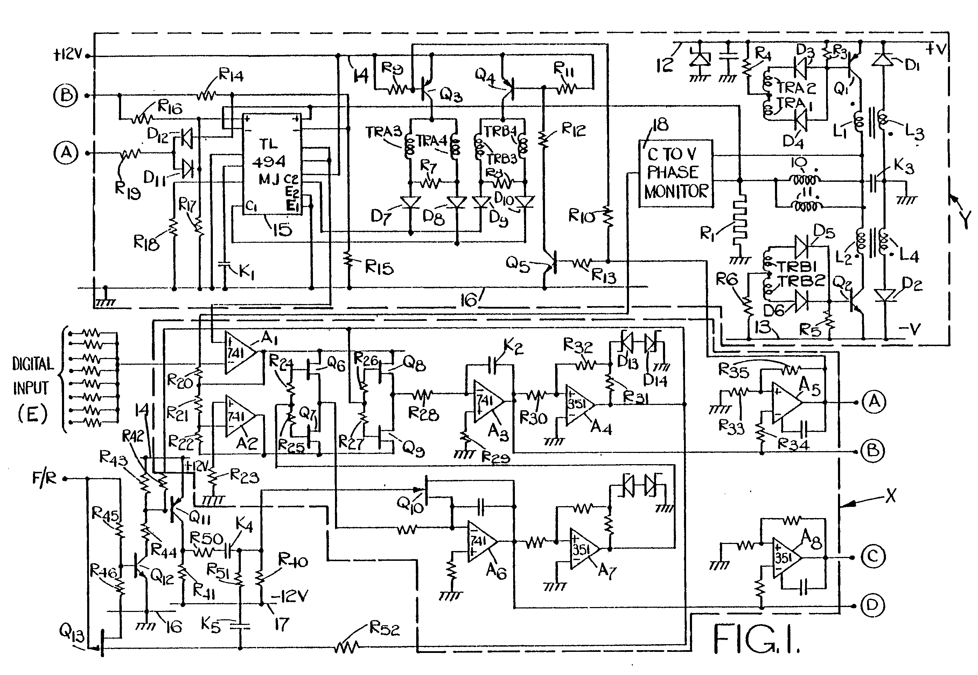

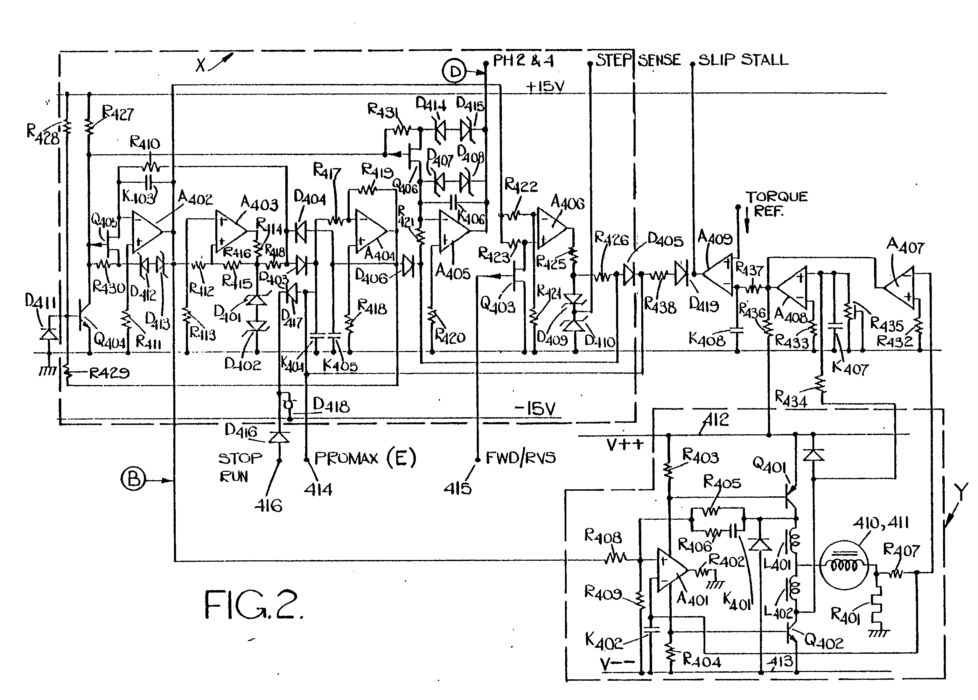

Two examples of the invention are shown in Figures 1 and 2 respectively of the accompanying drawings which are electrical circuit diagrams of the stepper motor control circuits.

Referring firstly to Figure 1, the stepper motor which is being controlled has four windings, two of which, 10 and 11 are shown in the accompanying drawing. These windings are connected in parallel with one another, via a current sensing resistor $R_1$ to ground at one end and the junction of two inductors $L_1$, $L_2$ at the other end. The inductors $L_1$, $L_2$ are connected in series between the collector of a pnp transistor $Q_1$ and the collector of an npn transistor $Q_2$ forming the output stage of a drive circuit (Y). Transistor $Q_1$ has its emitter connected to a positive power supply rail 12 and transistor $Q_2$ has its emitter connected to a negative power supply rail 13. The inductor $L_1$ is magnetically linked to a winding $L_3$ which is connected between ground and the anode of a diode $D_1$, the cathode of which is connected to rail 12. Similarly inductor $L_2$ is linked to a winding $L_4$ connected between ground and the anode of a diode $D_2$ which has its cathode connected to the rail 13. A capacitor $K_3$ is connected between the junction of inductors $L_1$ and $L_2$ and ground.

Transistor $Q_1$ is biased off by a resistor $R_3$ connected its base to the rail 12. The base of transistor $Q_1$ is also connected to the anodes of two diodes $D_3$ and $D_4$ the cathodes of which are connected to opposite ends of two series connected secondary windings $TRA_1$ and $TRA_2$, the common point of which is connected via a resistor $R_4$ to the rail 12. Similarly, transistor $Q_2$ is biased off by a resistor $R_5$ connected between rail 13 and the base of transistor $Q_2$ which is also connected to the cathodes of two diodes $D_5$ and $D_6$ having their anodes connected to opposite ends of two series secondary windings $TRB_1$ and $TRB_2$, the common point of which is connected by a resistor $R_6$ to the rail 13.

The transformer of which the windings $TRA_1$ and $TRA_2$ are the secondaries has two primary windings TRA3 and TRA4 which are both connected at one end to the collector of a pnp transistor $Q_3$ the emitter of which is connected to a +12V regulated supply rail 14. The other ends of windings TRA3 and TRA4 are connected to the anodes of two diodes $D_7$ and $D_8$ which have their cathodes connected respectively to the $C_2$ and $C_1$ output terminals of a switchmode pulse width modulation control integrated circuit 15 (type TL494MJ manufactured by Motorola Inc). A resistor $R_7$ interconnects the anodes of the diodes $D_7$ and $D_8$.

Similarly two primary windings TRB3 and TRB4 associated with windings TRB1 and TRB2 are connected at one end to the collector of a pnp transistor $Q_4$, the emitter of which is connected to the rail 14. Two diodes $D_9$ and $D_{10}$ connect the other ends of the windings $TRB_3$ and $TRB_4$ to the $C_2$ and $C_1$ terminals of i.c. 15. A resistor $R_8$ interconnects the anodes of diodes $D_9$ and $D_{10}$.

The transistors $Q_3$ and $Q_4$ are controlled by a signal at a terminal A so that when this signal is high transistor $Q_3$ is off and transistor $Q_4$ is on and when the signal is low transistor $Q_3$ is on and transistor $Q_4$ is off. To this end transistor $Q_3$ has its base connected by a resistor $R_9$ to the rail 14 and by a resistor $R_{10}$ to the terminal A. The transistor $Q_4$ has its base connected by a resistor $R_{11}$ to the rail 14 and by a resistor $R_{12}$ to the collector of an npn transistor $Q_5$ the emitter of which is connected to a ground rail 16 and the base of which is connected by a resistor $R_{j3}$ to the terminal A.

The integrated circuit 15 has its C.L. sense inverting input terminal connected by a resistor $R_{14}$ to a terminal B and by a resistor $R_{15}$ to the rail 16. The error amplifier non-inverting input terminal is connected by a resistor $R_{16}$ to terminal B and by a resistor $R_{17}$ to rail 16. The error amplifier inverting input terminal and the C.L. sense amplifier non-inverting input terminal are both connected to the junction between the current sensing resistor $R_1$ and the windings 10 and 11. The compensation/PWM Comparator terminal is left open circuit and is not used. The dead time control terminal, the ground terminal and the $E_1$ and $E_2$ terminals and all connected to rail 16. A resistor $R_{18}$ connects the RT terminal to rail 16 and a capacitor $K_1$ connects the $C_T$ terminal to ground. These two components control the frequency of a clock oscillator incorporated in i.c. 15. The $V_{REF}$ and output control terminals of the i.c. 15 are connected together. The error amplifier non-inverting input terminal of the i.c. 15 is also connected to the cathode of a diode $D_{11}$ and the C.L. sense amplifier inverting input terminal is connected to the anode of a diode $D_{12}$. The anode of diode $D_{11}$ and the cathode of diode $D_{12}$ are connected together and also connected via a resistor 19 to the terminal A.

The terminals A and B are the output terminals of a waveform generation circuit (X) which occupies the lower half of the drawing.

This waveform generation circuit receives an 8-bit digital word as an input, such word being derived in parallel form from a control computer (not shown), and representing the desired stepping frequency of the stepper motor. The respective bit inputs are connected by a simple d-to-a conversion network 18 to the inverting input of an operational amplifier $A_1$ which has a feedback resistor $R_{20}$ connected between its output and its inverting input. The non-inverting input of amplifier $A_1$ is connected to the reference voltage output of the i.c. 15.

The inverting input of an amplifier $A_2$ is connected by a resistor $R_{21}$ to the output of amplifier $A_1$ and by a resistor $R_{22}$ to the output of amplifier $A_2$. The non-inverting input of amplifier $A_2$ is grounded via a resistor $R_{23}$. Resistors $R_{21}$ and $R_{22}$ are of equal value so that amplifier $A_2$ acts as a unity gain inverting amplifier providing an output signal of the same magnitude as the output of amplifier $A_1$, but of opposite sign.

Two pairs of complementary f.e.t.s. $Q_6$ and $Q_7$, $Q_8$ and $Q_9$ are each connected in series between the outputs of amplifiers $A_1$ and $A_2$ the gates of f.e.t.s. $Q_6$ and $Q_7$ being connected together by two resistors $R_{24}$ and $R_{25}$ in series and the gates of f.e.t.s. $Q_8$ and $Q_9$ being connected together by two resistors $R_{26}$ and $R_{27}$. The voltage at the junctions of each of these pair of resistors determines which one of each pair of f.e.t.s. is conductive.

The junction between transistors $Q_8$ and $Q_9$ is connected via a resistor $R_{28}$ to the inverting input of an operational amplifier $A_3$ which has its non-inverting input grounded by a resistor $R_{29}$ and its output connected by a feedback capacitor $K_2$ to its inverting input. The amplifier $A_3$ operates as an integrator, the output of which ramps linearly at a rate determined by the output voltage of

amplifiers $A_1$ and in a sense determined by which of the two f.e.t.s. $Q_8$ and $Q_9$ is conductive.

The output of amplifier $A_3$ is connected by a resistor $R_{30}$ to the non-inverting input of a comparator $A_4$ which has its inverting input grounded. The output of comparator $A_4$ is connected by two resistors $R_{31}$ and $R_{32}$ in series to its inverting input, the junction of these resistors being connected by two oppositely connected zener dioded $D_{13}$, $D_{14}$ to ground. The output of amplifier $A_4$ is connected to the junction of resistors $R_{26}$ and $R_{27}$ so as to control the f.e.t.s. $Q_8$ and $Q_9$.

The amplifier $A_3$ and the comparator $A_4$ operate together as a triangular waveform generator with the output of amplifier $A_3$ swinging between two fixed positive and negative voltage levels set by the zener diodes $D_{13}$ and $D_{14}$. The frequency of the waveform is directly proportional to the voltage. The maximum value of the stepping frequency is an order of magnitude less than the frequency of the chopper.

The output of amplifier $A_3$ is connected to terminal B and is also connected by a resistor $R_{34}$ to the inverting input of a cmparator $A_5$, the non-inverting input of which is connected to ground by a resistor $R_{33}$. The output of comparator $A_5$ is connected to terminal A and is also connected by a relatively high ohmic value resistor $R_{35}$ to its non-inverting input. This ensures sharp switching of the comparator between its two output states, the comparator $A_5$ operating as a zero-crossing detector.

Assuming that the zener diodes $D_{13}$ and $D_{14}$ have breakdown voltages of 6.8V, the output of amplifier $A_3$ ramps between $-7.5V$ and $+7.5V$. The output of comparator $A_5$ is $-12V$ when the $A_3$ output is positive and $+12V$ when it is negative. The effect of resistors $R_{14}$ to $R_{17}$ and $R_{19}$ and diodes $R_{11}$ and $D_{12}$ is to determine which one of inputs of the i.c. 15 receives a real demand signal in the range of 0 to $\pm75mV$ and which one receives a false signal, the magnitude of which is increase by current flowing through resistor $R_{19}$.

Considering a cycle of operation which commences when the output of amplifier $A_3$ is at $-7.5V$ and rising, the signal at terminal B will be $-7.5V$ and that at terminal A, $+12V$. As a result the signal at the inverting input of the c.l. sense amplifier of i.c. 15 will be $-75mV$ whereas that at the non-inverting input of the error amplifier will be positive. The internal "high-wins" diode gate in i.c. 15 ensures that only the error signal corresponding to the difference between the $-75mV$ input signal and the voltage across $R_1$ has any controlling effect. The i.c. 15 operates to route fixed frequency variable duration pulses through the $E_1C_1$ and $E_2C_2$ path within the i.c. 15. Since transistor $Q_4$ is on as a result of the output of comparator $A_5$ being $+12V$, transformer $TR_B$ is pulsed so that transistor $Q_2$ is pulsed on and off appropriately. The current level in the winding 10 and 11 is regulated in this way to make the voltage across resistor $R_1$ $-75mV$.

As the output of amplifier $A_3$ rises the current

in resistor $R_1$ is progressively reduced. When the output of amplifier $A_3$ crosses zero, the output of comparator $A_5$ changes to $-12V$ so that the signal at the inverting input of the C.L. sense amplifier falls instantaneously to a relatively large negative value whereas that at the non-inverting input of the i.c. error amplifier falls to OV. At the same time transistor $Q_4$ switches off and transistor $Q_3$ switches on to cause the pulses from i.c. to control $Q_1$ instead of $Q_2$ and the forward current passed increases as the output of amplifier $A_3$ becomes increasingly positive. The inductors $L_1$ and $L_2$ serve to limit the current rise should transistors $Q_1$ and $Q_2$ become conductive simultaneously for a period during the zero crossing switch-over. Furthermore the windings $L_3$, $L_4$, which make up 1:1 transformers (at the switching frequency) with the respective inductors $L_1$ and $L_2$, the diodes $D_1$, $D_2$ and the capacitor $K_3$ ensure that motor current is maintained whilst either $Q_1$ or $Q_2$ is switched off, and is "dumped" in the appropriate supply rail 12 or 13 even at low stepping frequency.

Similarly the current in windings 10 and 11 is controlled during the period when the output of amplifier $A_3$ is ramping downwardly.

The stepper motor also includes a second pair of windings (not shown) which are to be drive with a current waveform 90° out of phase with that in the windings 10 and 11 and either lagging or leading depending on the required direction of drive. To this end a second integrating amplifier $A_6$, and further comparators $A_7$ and $A_8$ are provided. Amplifier $A_6$ and comparator $A_8$ provide signals to terminals D and C which are inputs to another circuit exactly the same as that shown in the upper half of the drawing as described above, which circuit drives the other two motor windings. Amplifier $A_6$ integrates the signal at the output of f.e.t.s. $Q_6$ and $Q_7$ which are controlled by the signal at the output of comparator $A_7$.

To ensure that the two waveform generator circuits run in the required phase relationship, an f.e.t. $Q_{10}$ is connected between the output and inverting input terminals of amplifier $A_6$ to ensure that the integrating capacitor associated therewith is held discharged at certain times.

The gate of transistor $Q_{10}$ is connected by a resistor $R_{40}$ to a $-12V$ rail 17. The gate of transistor $Q_{10}$ is also connected via a capacitor $K_4$ and a resistor $R_{50}$ in series to the collector of a pnp transistor $Q_{11}$ which has its emitter connected to the rail 14 and its collector connected by a resistor $R_{41}$ to the rail 17. The base of transsitor $Q_{11}$ is connected by a resistor $R_{42}$ to the output terminal of amplifier $A_4$ and also connected to the junction of two resistors $R_{43}$, $R_{44}$ in series between the rail 14 and the collector of an npn transistor $Q_{12}$. The emitter of the transistor $Q_{12}$ is grounded and its base is connected to the junction of two resistors $R_{45}$, $R_{46}$ in series between a FWD/RVSE terminal and ground. Further the gate of transistor $Q_{10}$ is connected by a resistor $R_{51}$ and a capacitor $K_5$ in series with the drain-source of a field effect transistor $Q_{13}$ to ground. The gate of transistor $Q_{13}$

is connected directly to the FWD/RVSE terminal. A resistor $R_{52}$ connects the drain of transistor $Q_{13}$ to the output of amplifier $A_4$.

For forward running the start of the triangular wave at D should coincide with the leading edge of the square wave from amplifier $A_4$, whereas for reverse running it should coincide with the trailing edge of that square wave. The square wave at the output of amplifier $A_4$ is inverted by transistor $Q_{11}$. When the signal at the FWD/RVSE terminal is high $Q_{11}$ is turned on continuously, thereby preventing it from operating as an inverter, but the f.e.t. $Q_{13}$ is off. Thus the positive going edges of the square wave output of amplifier $A_4$ are differentiated by capacitor $K_5$ and provide positive going spikes coincident with these edges to turn on f.e.t. $Q_{10}$. The negative spikes created at the trailing edges of the square waves have no effect. When the signal at the FWD/RVSE terminal is low f.e.t. $Q_{13}$ is on and therefore grounds the pulses arriving via resistor $R_{52}$. Transistor $Q_{11}$ acts as an inverter and the rising edges of the inverted waveform create positive spikes to turn on f.e.t. $Q_{10}$ in synchronism with the trailing edges of the square waves from amplifier $A_4$.

The circuit described ensures that no shock loads are applied to the rotor of the motor. The use of a chopper current control to control current with a triangular waveform or other stepless symmetrical waveform overcomes the problem in known stepper motor controls of shock excited "pendulum" type vibration of the rotor. Thus no pull-in and drop-out problems arise from rotor resonances being excited. The rotor can be stopped in any desired position between the normal stable positions by maintaining the current in the motor windings at the level at which it was flowing at the moment of coming to rest. Controlled acceleration and deceleration of the motor under the control of the computer are easily achieved.

The use of transformer coupling to the output transistors $Q_1$ and $Q_2$ and the employment of a three rail supply enable the output stage to be made very simple. Only two high power transistors are needed and two diodes $D_1$ and $D_2$ provide the necessary current recirculation paths, with winding current continuing to flow through the sensing resistor $R_1$.

The integrated circuit 15 employed, although intended for use in power supply regulation, proves to be entirely suitable for stepper motor control and makes the chopper drive circuit extremely simple.

The circuit includes a current/voltage phase monitor 18 arranged to provide additional current into the summing junction of amplifier $A_1$ when the current in resistor $R_1$ is out of phase with the voltage at the junction of inductors $L_1$ and $L_2$. In this way the stepping frequency is reduced if the motor is overloaded.

The arrangement shown in Figure 2 includes an analog waveform generator (X) driving a simple bipolar transistor pulse width modulator (Y).

The windings 410, 411 are connected at one end to the junction of two inductors $L_{401}$, $L_{402}$ connected in series between the collectors of two output transistors $Q_{401}$, $Q_{402}$, and at the other end via a current sensing resistor $R_{401}$ to ground. Transistor $Q_{401}$ is a pnp transistor and has its emitter connected to the positive supply rail 412, whereas transistor $Q_{402}$ is an npn transistor which has its emitter connected to the negative supply rail 413. The transistor $Q_{401}$, $Q_{402}$ are controlled by an operational amplifier $A_{401}$ which has a load resistor $R_{402}$ connected between its output terminal and ground. The positive and negative supply terminals of amplifier $A_{401}$ are connected to rails 412 and 413 by respective resistors $R_{403}$, $R_{404}$ and are also connected respectively to the bases of the transistors $Q_{401}$ and $Q_{402}$. Positive feedback is provided via a resistor $R_{405}$, in parallel with the series combination of a resistor $R_{406}$ and a capacitor $K_{401}$, between the collector of the transistor $Q_{401}$ and the non-inverting input of amplifier $A_{401}$. Negative feedback is provided by a resistor $R_{407}$ connected between resistor $R_{401}$ and the inverting input of amplifier $A_{401}$, a capacitor $K_{402}$ connecting this inverting input to the rail 413. A current demand signal is applied to the non-inverting input of amplifier $A_{401}$ via a resistor $R_{408}$ and a resistor $R_{409}$ connects this non-inverting input to the rail 413.

The amplifier $A_{401}$ in fact operates as a voltage comparator. When the voltage at the inverting input is higher than that at the non-inverting input current flows from ground through the resistor $R_{402}$ into the output of amplifier $A_{401}$ and hence through resistor $R_{404}$ to rail 413. Thus transistor $Q_{402}$ turns on. When the voltage at the inverting input is lower than that at the non-inverting input, transistor $Q_{402}$ turns on. Resistor $R_{405}$ changes the voltage at non-inverting input of amplifier $A_{401}$ to cause the amplifier $A_{401}$ to operate in the manner of a Schmidt trigger with upper and lower thresholds linearly dependent on the current demand signal. Current feedback via resistor $R_{407}$ shunted by capacitor $K_{402}$ makes the whole circuit into an oscillator and the inductive load ensures that the charge/discharge rates of capacitor $K_{402}$ depend on the average current flow in the load so that pulse-width modulation is obtained to regulate the current to the demand value.

The current demand signal is derived from an operational amplifier $A_{402}$ connected as an active integrator having an input resistor $R_{410}$ and a feedback capacitor $K_{403}$. A resistor $R_{411}$ connects the non-inverting input of amplifier $A_{402}$ to ground. The output of amplifier $A_{402}$ is connected by a resistor $R_{412}$ to the non-inverting input of an amplifier $A_{403}$ the inverting input of which is connected by a resistor $R_{413}$ to ground. Two resistors $R_{414}$ and $R_{415}$ in series connect the output of amplifier $A_{403}$ to its non-inverting input, the junction of such resistors being connected to ground by two back-to-back zener diodes $D_{401}$ and $D_{402}$ in series. The junction of resistors $R_{414}$ and $R_{415}$ is also connected by a resistor $R_{416}$ to the integrator input resistor $R_{410}$. Two capacitors $K_{404}$ and $K_{405}$ are connected by oppositely poled

diodes $D_{403}$, $D_{404}$ to the junction of resistors $R_{416}$ and $R_{410}$, such capacitors being grounded. An amplifier $A_{404}$ is connected to ensure that the voltages on capacitors $A_{404}$ and $K_{405}$ are equal and opposite. To this end amplifier $A_{404}$ and its inverting input connected by a resistor $R_{417}$ to the capacitor $K_{404}$ and its non-inverting input grounded via a resistor $R_{418}$. A feedback resistor $R_{419}$ connects the output of amplifier $A_{404}$ to its inverting input to provide unityt gain inverting operation and the output of amplifier $A_{404}$ is connected to capacitor $K_{405}$.

It will be appreciated that the amplifier $A_{403}$ operates as a Schmidt trigger circuit determining the polarity of the signal applied via the resistor $R_{410}$ to the integrating amplifier $A_{402}$. However, the magnitude of the signal applied to the integrator depends on the voltage for the time being stored on the capacitors $K_{404}$, $K_{405}$. The circuit thus far described therefore operates as a triangular waveform generator, the amplitude of the waveform being fixed, but the frequency being inversely proportional to the voltage stored on the capacitors $K_{404}$, $K_{405}$.

A second integrator is provided for generating an identical waveform, suitable phase-shifted, for the other phase windings (not shown) of the motor. This second integrator includes an operational amplifier $A_{405}$ which has its non-inverting input grounded via a resistor $R_{420}$. An input resistor $R_{421}$ for this integrator is connected at one end to the anode of a diode $D_{405}$, which has its cathode connected to the capacitor $K_{404}$, and to the cathode of a diode $D_{406}$ which has its anode connected to the capacitor $K_{405}$, and at the other end to the inverting input of amplifier $A_{405}$. A feedback capacitor $K_{406}$ is connected between the output and non-inverting input terminals of the amplifier $A_{405}$. Two zener diodes $D_{407}$, $D_{408}$ connected back-to-back are also connected between the output and inverting input terminals of amplifier $A_{405}$.

The polarity of the signal integrated by amplifier $A_{405}$ is determined by an operational amplifier $A_{406}$ which is connected to operate as a zero-crossing detector. The two inputs of this amplifier $A_{406}$ are connected by respective resistors $R_{422}$ and $R_{423}$ to the output of amplifier $A_{402}$. The inverting input is connected by a resistor $R_{424}$ to ground whereas the non-inverting input is connected by the drain-source path of an FET $Q_{403}$ to ground. The amplifier $A_{406}$ operates in inverting or non-inverting mode according to whether the FET $Q_{403}$ is conductive or not. The gate of FET $Q_{403}$ is connected to a FWD/RVS input terminal 415, the signal at which thus determines the mode of operation of the amplifier $A_{406}$. The output terminal of amplifier $A_{406}$ is connected by a resistor $R_{425}$ to the anode of a zener diode $D_{409}$, which is connected back-to-back with a zener diode $D_{410}$ having its anode connected to ground. A resistor $R_{426}$ connects the anode of zener diode $D_{409}$ to the anodes of the diode $D_{405}$.

Each of the integrators $A_{402}$ and $A_{405}$ has a resetting circuit associated with it and these are controlled by a single npn transistor $Q_{404}$ which has its emitter grounded and its collector connected to the +15V rail by a resistor $R_{427}$. The base of this transistor is connected by a resistor $R_{428}$ to the +15V rail, by a resistor $R_{429}$ to the capacitor $K_{405}$ and by a diode $D_{411}$ to ground, the cathode of diode $D_{411}$ being connected to the base of transistor $Q_{404}$. The resetting circuit associated with amplifier $A_{402}$ includes an FET $Q_{405}$ with its gate connected to the collector of transistor $Q_{404}$, its drain connected by a resistor $R_{430}$ to the collector of transistor $Q_{404}$ and by two back-to-back zener diodes $D_{412}$ and $D_{413}$ to the output of amplifier $A_{402}$ and its source connected to the inverting input of amplifier $A_{402}$. FET $Q_{405}$ is conductive whenever the transistor $Q_{404}$ is of which occurs when the voltage on capacitor $K_{405}$ is sufficient to hold the base of transistor $Q_{404}$ low. In these circumstances the zener diodes $D_{412}$ and $D_{413}$ determine the peak positive and negative excursion of the output of amplifier $A_{402}$ instead of the amplifier $A_{403}$. The resetting circuit of amplifier $A_{405}$ is identical and comprises a similarly connected FET $Q_{406}$, two zener diodes $D_{414}$ and $D_{415}$ and a resistor $R_{431}$.

The voltage on capacitor $K_{404}$ is limited by an external limiting circuit (not shown) to which it is connected via a PRO MAX terminal 414. A STOP/RUN terminal 416 is connected to the anode of a diode $D_{416}$ the cathode of which is connected to the cathode of a diode $D_{417}$ having its anode connected to the capacitor $K_{404}$. A constant current diode $D_{418}$ connects the cathodes of diodes $D_{416}$, $D_{417}$ to the −15V rail. When the signal at the RUN/STOP terminal is low the capacitor $K_{404}$ discharges linearly to zero through the constant current diode $D_{418}$. When the signal at the RUN/STOP diode is high, capacitor $K_{404}$ can charge up via resistor $R_{416}$ and diode $D_{403}$ from the output of amplifier $A_{403}$.

The circuit also includes a stall or slip detector which operates by comparing the phases of the voltage across and current in the winding 410, 411. This detector circuit includes an operational amplifier $A_{407}$ which has its non-inverting input grounded by resistor $R_{432}$ and its inverting input connected to the capacitor $K_{402}$ of the pulse width modulator circuit. This amplifier $A_{407}$ detects zero crossings in the average current waveform. Another operational amplifier $A_{408}$ has its inverting input grounded by a resistor $R_{433}$ and its non-inverting input connected by a resistor $R_{434}$ to the collector of the transistor $Q_{402}$, and by a capacitor $K_{407}$ in parallel with a variable resistor $R_{435}$ to ground. Resistor $R_{434}$ and capacitor $K_{407}$ operate as an averaging filter and variable resistor $R_{435}$ acts to provide phase compensation at higher speeds. Amplifier $A_{408}$ thus detects zero crossings in the averaged and phase compensated voltage waveform.

The amplifier $A_{407}$ and $A_{408}$ have open-collector outputs and the output terminals of these are connected together and are connected by a resistor $R_{436}$ to the rail 412. These output terminals are also connected by a resistor $R_{437}$ to the inverting input of an amplifier $A_{409}$, such input also being connected by a capacitor $K_{408}$ to ground. The non-inverting input of amplifier $A_{409}$ is connected to a reference voltage source which supply a reference voltage representing the maximum torque which the motor can provide without slipping. The amplifiers $A_{407}$ and $A_{408}$ form a phase detector such that, when the voltage and current waveforms are exactly in phase one or another of the outputs is zero, thereby holding capacitor $K_{408}$ discharged. As the torque on the motor is increased the phase difference between the current and voltage waveforms increases so that for an increasing proportion of the time the outputs of both amplifiers $A_{407}$, $A_{408}$ are high simultaneously. Thus capacitor $K_{408}$ charges to a voltage which is dependent on the phase-shift, i.e. on the torque load on the motor.

The output of amplifier $A_{409}$ is connected to a SLIP/STALL terminal which may be connected to a stall indicator. In addition the output of amplifier $A_{409}$ is connected to the cathode of a diode $D_{419}$, the anode of which is connected by a resistor $R_{438}$ to the capacitor $K_{404}$.

In use, as mentioned above, when the signal at the STOP/RUN terminal 416 is low capacitor $K_{404}$ is held discharged so that neither integrator $A_{402}$ nor $A_{405}$ operates. When the signal at terminal 416 goes high the capacitor $K_{404}$ will start to change from which ever one of the amplifiers $A_{403}$, $A_{406}$ is producing a high output. The signal which is integrated by the amplifiers $A_{402}$, $A_{405}$ is thus initially small in magnitude and the rate at which the motor is stepped is therefore correspondingly slow. As the capacitor $K_{404}$ charges, however, the stepping rate increases until the maximum step rate determined by the transistor $Q_{404}$ is reached (or determined by the PRO MAX input if this is less). The two waveforms produces are maintained 90° out of phase by the operation of amplifier $A_{406}$ and any drift which occurs in the integrating amplifier $A_{402}$, $A_{405}$ is dealt with automatically by clipping of the waveforms by operations of the resetting circuits referred to (unless the PRO MAX control is in use).

Should slip start occur the output of amplifier $A_{409}$ goes low, causing the capacitor $K_{404}$ to discharge through the resistor $R_{438}$ and the diode $D_{419}$, thereby reducing the stepping rate to a level at which the output of amplifier $A_{409}$ goes high, whereupon capacitor $K_{404}$ will start to recharge.

The circuits described above provide smooth and accurate control of the stepper motor and permit running of the motor at higher stepping rates than are usually possible, whilst ensuring that slip does not occur by reducing the stepping rate if the torque is too high for running at speed to continue without slip or stall.

**Claims**

1. A stepper motor control circuit comprising a waveform generator circuit (X) arranged to generate a pair of substantially stepless symmetrical waveforms (at B, D) of constant amplitude and of frequency determined by a step rate demand signal received thereby (at E), the waveforms being 90° out of phase, a pair of pulse width modulation circuits (Y) arranged to drive the motor windings (10, 11 or 410, 411), each modulation circuit receiving one of the waveforms as a current demand signal and a feedback signal from a current sensor ($R_1$ or $R_{401}$) providing a signal related to the instantaneous current in the associated ones of the motor windings, a phase detector circuit (18 or $A_{407}$, $A_{408}$) operating to provide a signal related to the difference between the phases of the voltage applied to and the current flowing in the motor windings, characterised in that the step rate demand signal is variable and in that the phase detector circuit is connected to the waveform generator so as to reduce the frequency of the waveforms independently of the step rate demand signal when a predetermined out of phase condition is detected by said phase detector circuit.

2. A stepper motor control circuit as claimed in claim 1 in which said waveform generator includes a pair of active integrators ($A_3$, $A_6$ or $A_{402}$, $A_{405}$) connected to integrate said signal derived from step rate demand between upper and lower limits, and means for maintaining a 90° phase difference between said waveforms by resetting one integrator when the output of the other reaches one of said limits, characterised by means ($A_1$, or $A_{409}$ $D_{419}$ and $R_{438}$) for reducing said signal derived from the step rate demand signal when the predetermined out of phase condition is detected.

3. A stepper motor control circuit as claimed in claim 2 in which said signal derived from the step rate demand signal is stored on a capacitor ($K_{404}$) and said signal reducing means includes a comparator ($A_{409}$) for comparing the output of the phase detector circuit with a reference value and a circuit path ($D_{419}$ and $R_{438}$) connecting the output of said comparator to said capacitor $K_{404}$ for reducing the voltage on said capacitor whilst the output of the phase detector exceeds the reference value.

**Patentansprüche**

1. Schrittmotorregelschaltung mit einer Wellenformgeneratorschaltung (X), die zum Erzeugen eines Paares von im wesentlichen stufenlosen, symmetrischen Wellenformen (an B, D) von konstanter Amplitude und von einer Frequenz, die durch ein daran (an E) erhaltenes Schrittratenanforderungssignal bestimmt wird, eingerichtet ist, wobei die Wellenformen um 90° aus der Phase sind, einem Paar von Pulsbreitenmodulationsschaltungen (Y), die zum Treiben der Motorwicklungen (10, 11 oder 410, 411) eingerichtet sind, wobei jeder Modulationsschaltkreis eine der Wellenformen als ein Stromanforderungssignal und ein Rückkopplungssignal von einem ein Signal in Abhängigkeit von dem momentanen Strom in den zugeordneten der Motorwicklungen vorsehenden Stromsensor ($R_1$ oder $R_{401}$) emp-

fängt, einer Phasennachweisschaltung (18 oder $A_{407}$ oder $A_{408}$), die zum Vorsehen eines Signales in Abhängigkeit von der Differenz zwischen den Phasen der Spannung, die an die Motorwicklungen angelegt ist, und des Stromes, der in den Motorwicklungen fließt betrieben wird, dadurch gekennzeichnet, daß das Schrittratenanforderungssignal variabel ist und daß die Phasennachweisschaltung mit dem Wellenfrontgenerator so verbunden ist, daß die Frequenz der Wellenformen unabhängig von dem Schrittratenanforderungssignal reduziert wird, wenn eine vorbestimmte Phasenverschiebungsbedingung durch die Phasennachweisschaltung nachgewiesen wird.

2. Schrittmotorregelschaltung nach Anspruch 1, in welcher der Wellenformgenerator ein Paar von aktiven Integratoren ($A_3$, $A_6$ oder $A_{402}$, $A_{405}$), die zum Integrieren des von Schrittratenanforderung abgeleiteten Signales zwischen oberen und unteren Grenzen angeschlossen sind, und eine Vorrichtung zum Aufrechterhalten einer 90°-Phasendifferenz zwischen den Wellenformen durch Rückstellen eines Integrators, wenn die Ausgabe des anderen eine der Grenzen erreicht, aufweist, gekennzeichnet durch eine Vorrichtung ($A_1$ oder $A_{409}$, $D_{419}$ und $R_{438}$) zum Reduzieren des von dem Schrittratenanforderungssignal abgeleiteten Signales, wenn die vorbestimmte Phasenverschiebungsbedingung nachgewiesen wird.

3. Schrittmotorregelschaltung nach Anspruch 2, in welcher das von dem Schrittratenanforderungssignal abgeleitete Signal in einem Kondensator ($K_{404}$) gespeichert wird und die Signalreduzierungseinrichtung einen Komparator ($A_{409}$) zum Vergleichen der Ausgabe der Phasennachweisschaltung mit einem Referenzwert und einen Schaltungspfad ($D_{419}$ und $R_{438}$) zum Verbinden des Ausganges des Komparators mit dem Kondensator ($K_{404}$) zum Reduzieren der Spannung an dem Kondensator, während die Ausgabe des Phasennachweisers den Referenzwert überschreitet, aufweist.

**Revendications**

1. Circuit de commande de moteur pas à pas comprenant un circuit générateur de formes d'onde (X) agencé pour engendrer une paire de formes d'onde symétriques essentiellement sans échelon (en B, D) d'amplitude constante et de fréquence déterminée par un signal de demande de vitesse échelonnée reçu par celui-ci (en E), les formes d'onde étant déphasées de 90°, une paire de circuits de modulation de largeur ou durée d'impulsion (Y) agencés pour exciter les enroulements de moteur (10, 11 ou 410, 411), chaque circuit de modulation recevant une des formes d'onde comme un signal de demande de courant et un signal de réaction d'un détecteur de courant ($R_1$ ou $_{401}$) fournissant un signal relatif au courant instantané dans les enroulements associés des enroulements de moteur, un circuit détecteur de phase (18 ou $A_{407}$, $A_{408}$) fonctionnant pour fournir un signal relatif à la différence entre les phases de la tension appliquée aux et du courant passant dans les enroulements de moteur, caractérisé en ce que le signal de demande de vitesse échelonnée est variable et en ce que le circuit détecteur de phase est connecté au générateur de formes d'onde de manière à réduire la fréquence des formes d'onde indépendamment du signal de demande de vitesse échelonnée quand une condition de déphasage prédéterminée est détectée par le circuit détecteur de phase.

2. Circuit de commande de moteur pas à pas selon la revendication 1, dans lequel le générateur de formes d'onde comprend une paire d'intégrateurs actifs ($A_3$, $A_6$ ou $A_{402}$, $A_{405}$) connectés pour intégrer le signal dérivé d'une demande de vitesse échelonnée entre des limites supérieur et inférieure, et un moyen pour maintenir un déphasage de 90° entre les formes d'onde en remettant à l'état initial un intégrateur quand le signal de sortie de l'autre atteint une des limites, caractérisé par un moyen ($A_1$ ou $A_{409}$, $D_{419}$ et $R_{438}$) pour réduire le signal dérivé du signal de demande de vitesse échelonnée quand la condition de déphasage prédétermine est détectée.

3. Circuit de commande de moteur pas à pas selon la revendication 2, dans lequel le signal dérivé du signal de demande de vitesse échelonnée est stocké dans un condensateur ($K_{404}$) et le moyen de réduction de signal comprend un comparateur ($A_{409}$) pour comparer le signal de sortie du circuit détecteur de phase à une valeur de référence et un chemin de circuit ($D_{419}$ et $R_{438}$) reliant la sortie du comparateur au condensateur $K_{404}$ pour réduire la tension au condensateur alors que le signal de sortie du détecteur de phase dépasse la valeur de référence.

FIG.1.

0 099 918

FIG.2.